# EUROPEAN PATENT SPECIFICATION

(11) **EP 2 905 153 B1**
(45) Date of publication and mention of the grant of the patent: **07.12.2016**
(21) Application number: 15153397.3
(22) Date of filing: 02.02.2015
(51) Int. Cl.: B60C 25/13, B60C 25/135, B60C 25/05

(54) **TYRE-CHANGING MACHINE**
REIFENWECHSELMASCHINE
MACHINE DE CHANGEMENT DE PNEU

(30) Priority: 07.02.2014 IT MO20140023
(43) Date of publication of application: 12.08.2015
(73) Proprietor: SICAM S.r.l., 42015 Correggio (RE) (IT); ROBERT BOSCH GMBH, 70442 Stuttgart (DE)
(72) Inventor: Macchia, Adriano, 80798 Munich (DE); Vescovini, Marco, 41032 Cavezzo (MO) (IT)
(74) Representative: Luppi, Emanuele

(56) References cited:
- EP-A1- 1 475 252
- EP-A1- 1 897 708
- EP-A2- 1 459 913

## Description

The present invention relates to a tyre-changing machine for fitting and removing wheels of vehicles.

The wheels for vehicles consist of a metal rim having, at its axial extremities, annular containment flanges between which a groove is defined for inserting a tyre by interlocking.

In the mounting configuration, the lateral portions of the tyre, so-called "beads", abut against the containment flanges.

An air chamber can be inserted in the tyre or, in case of "tubeless" tyres, pressurized air can be introduced directly.

Tyre-changing machines are currently employed to perform the fitting and removal operations of tyres onto and from the relative rims.

They allow to remove the tyre from its rim, after bead-breaking, for example to perform maintenance or replacement jobs on the air chamber, the rim and/or the tyre itself, and then to mount it again, or place a new one, on the rim.

The tyre-changing machines generally have:
- a spindle that allows to put the wheel in rotation around an axis of rotation;
- a hook-shaped demounting tool, which allows to pull one of the tyre beads out of the rim; and
- one or more rollers that lift the opposite flank of the tyre.

In tyre-changing machines with spindles having a vertical rotation axis, for example, the wheel is fitted on the machine so as to lie substantially on a horizontal plane of arrangement, with its beads/flanks arranged one above and one below.

In these machines the hook-shaped demounting tool is generally arranged above the wheel and progressively pulls the upper bead out of the tyre.

The rollers, on the other hand, are arranged below the wheel and lift the lower flank and bead upwards.

In particular, the rollers press against the flank of the tyre while the wheel and tyre are made to rotate.

The fitting and removal of wheels is to be considered a very delicate job.

In this regard it is underlined that, thanks to the technological progress, so-called "run-flat" tyres are available on the market having particularly hard and thick beads and flanks for which the force needed to remove the tyre is significantly increased.

As a consequence, an operator has more chances to damage a tyre during its removal and this risk is so high that tyre manufacturers advise against mounting a run-flat tyre again because of the damage occurred during the fitting and removal procedure.

In the light of the particular sensitivity required during the fitting and removal operations on tyres, the traditional tyre-changing machines have some drawbacks which may be mainly summarized as follows:
- the hook-shaped demounting tool puts locally in traction one part of the bead involved, with the risk of stretching and irretrievably damaging it;
- the rollers of known type press against the opposite bead of the tyre and apply a great force on a small area. These great localized forces, in combination with the rotation of the tyre and rim, increase the chances of damaging the tyre. The application of a force on the tyre flank and the simultaneous rotation of the wheel, in fact, may lead to the formation of cuts inside the tyre which the operator, during the job, may not be aware of and which can cause the ultimate breakage of the tyre at a later time, e.g. when the wheel has already been remounted on the vehicle and the possible damage can also be more serious. This problem is particularly felt for run-flat tyres.

Tyre changing machines according to the preamble of claim1 are disclosed in the patent documents EP 1 475 252, EP 1 459 913 and EP 1 897 708.

The main aim of the present invention is to provide a tyre-changing machine that reduces/eliminates the chance of damaging the tyre and rim during the removal procedure.

Another object of the present invention is to provide a tyre-changing machine that reduces/eliminates the chance of damaging run-flat tyres, during the removal procedure, thus allowing them to be securely mounted more than once.

A further object of the present invention is to provide a tyre-changing machine which allows to overcome the mentioned drawbacks of the prior art in the ambit of a simple, rational, easy and effective to use as well as affordable solution.

The above mentioned objects are achieved by a machine having the characteristics mentioned in claim 1.

Other characteristics and advantages of the present invention will become better evident from the description of a preferred, but not exclusive, embodiment of a tyre-changing machine, illustrated by way of an indicative, but not limitative example in the accompanying drawings in which:
Figure 1 is an axonometric view of the machine according to the invention;
Figure 2 is a view from above of the machine according to the invention;
Figures 3 and 4 show, in a sequence of axonometric views, the removal stages of a tyre obtained by means of the machine according to the invention.

With particular reference to such illustrations, globally indicated with reference number 10 is a tyre-changing machine for a wheel R, which comprises in a known manner a rim C on which is mounted a tyre PN having a first flank F 1, a second flank F2 and a portion of tread B.

The machine 10 comprises a base or bed 12 for resting on the ground, from which extends a spindle 14 on which the wheel R is mountable.

The spindle 14 is configured to tighten the rim C on the bed 12, e.g. by means of a locking clamp or hub 16 which can be interlocked or screwed into the spindle 14.

The rim C is tightened so as to fix an imaginary axis of rotation A of the wheel R with respect to the bed 12, with the first flank F1 arranged in a distal position with respect to the bed 12 and the second flank F2 arranged in a proximal position with respect to the bed 12.

In other words, when the wheel R is fitted on the spindle 14, the first flank F1 is located farther from the bed 12 with respect to the second flank F2, which is on the contrary facing it.

In the particular embodiment shown in the illustrations, the spindle 14 is arranged vertically above the bed 12.

This means that, when the wheel R is fixed to the spindle 14, its imaginary axis of rotation A is oriented vertically, with the first flank F1 turned upwards and the second flank F2 turned downwards.

Alternative embodiments cannot be ruled out, however, wherein the spindle 14 and the axis A are oriented in a different way, e.g., horizontal or oblique.

On the bed 12 is mounted a known bead breaker arm 20 with its "blade" 22.

The known bead breaker arm 20 can be operated horizontally to remove the tyre PN, i.e. to move the beads of the flanks F1, F2 away from the rim C as a preliminary j ob to removal.

According to the invention, the machine 10 comprises a support arm 30 having a demounting tool 32 at its free extremity.

The demounting tool 32 has a non-rolling contact surface 34 able to contact and push the second flank F2 along a direction of moving away from the bed 12 until extracting the first flank F1 from the rim C.

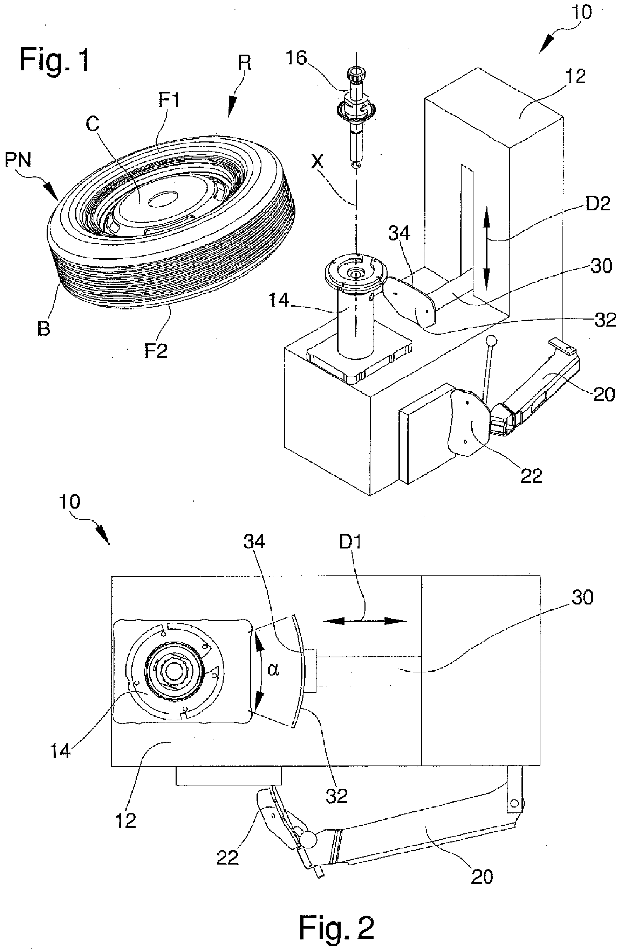

The direction of moving away is substantially parallel to the axis A and is shown by arrow D2 in Figure 1.

The spindle 14 and the demounting tool 32 are reciprocally movable, i.e. one with respect to the other, along the direction of moving away D2 with a stroke that extends between two ends, so as to push the tyre PN out of the rim C during the stroke.

In the particular embodiment shown in the illustrations, the support arm 30 is movable manually or by means of known (hydraulic, pneumatic, or electric) operations to shift the demounting tool 32 along the direction of moving away D2 with respect to the spindle 14, which on the contrary is fixed with respect to the bed 12.

Preferably, with the advantage of being able to adjust the abutment point of the demounting tool 32 on wheels R of any diameter, the support arm 30 is also adjustable in the radial distance from the center of the wheel R, i.e. along a direction D1 substantially orthogonal to the axis A.

As can be clearly seen in Figure 2, the demounting tool 32 consists of a piece folded in the shape of an arc, oriented in such a way as to contact the second flank F2 of the wheel R, with the upper edge which is curved to define the non-rolling contact surface 34.

In this regard, it is underlined that in the present discussion the term "non-rolling contact surface" means an area of the demounting tool 32 that comes in contact with the second flank F2 without being able to roll on the tyre PN.

In this regard, it is noticed that the demounting tool 32 is fixed to the support arm 30 and does not have any rotary motion.

The non-rolling contact surface 34, as said, is substantially curved and has the concavity thereof facing the axis A.

In other words, the non-rolling contact surface 34 is shaped so as to reproduce at least in part the rounded shape of the wheel R and of the second flank F2 on which the demounting tool 32 is pressed.

The angular opening of the non-rolling contact surface 34 is quite large and allows the demounting tool 32 to come in contact with a very large angular sector of the tyre PN; this characteristic is essential in order to be able to extract the first flank F1 by pressing on the second flank F2.

In particular, the angular opening α of the non-rolling contact surface 34 is within the range 30°-60°, more precisely between 40°-50°, and preferably equal to 45°.

Furthermore, this arc may have a length within the range 10-30 cm, more precisely between 15-25 cm, and preferably equal to 20 cm.

The demounting tool 32 therefore has a large contact surface, larger than that present in the lifting rollers of the prior art.

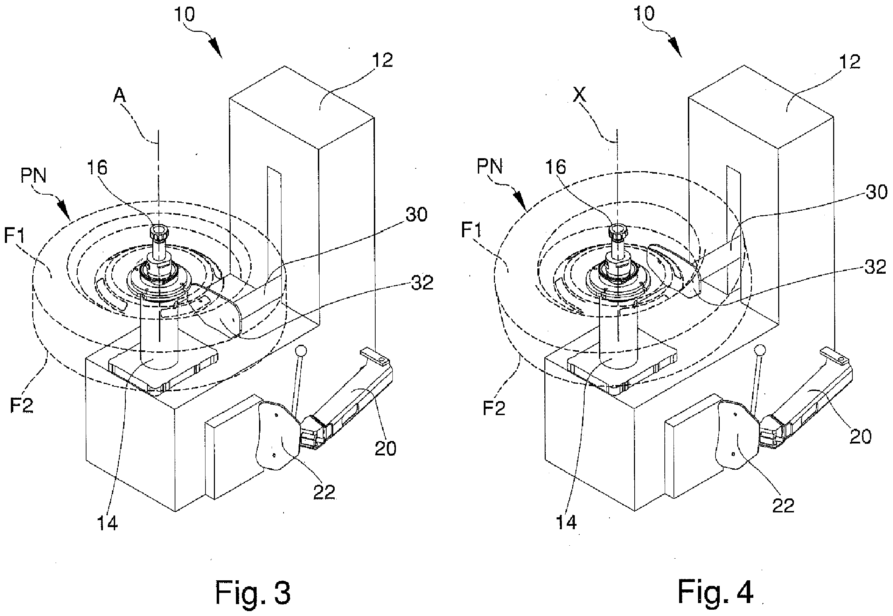

With reference to Figures 3 and 4 it is now described the operation of the machine 10.

The wheel R is first of all removed, in the known manner, e.g. by means of the bead breaker arm 20 or preparing the wheel R elsewhere.

Then the wheel R is placed on the spindle 14 and locked therein by means of the hub 16.

The demounting tool 32 approaches the spindle 14 and the axis A, while remaining under the wheel R, in order to move the demounting tool 32 in alignment with the second flank F2 (Figure 3).

After reaching the position, the demounting tool 32 is lifted parallel to the axis A along the direction of moving away D2 by means of the support arm 30, as far as touching and pushing the second flank F2 (Figure 4).

The demounting tool 32 then moves upwards parallel to the axis A, forcing the first flank F1 to exit from the rim C and until the whole tyre PN has not been extracted, thus completing its removal.

For this purpose the demounting tool 32 moves at least as far as - and preferably goes beyond - the level of the rim C and/or the upper extremity of the spindle 14, with a stroke slightly bigger than the thickness or depth of the rim C.

In this regard it is underlined that the ends of the stroke are at a distance of at least 40 cm.

It follows that a removal method for removing a bead-broken tyre from the rim of a wheel comprises the following steps:
- providing the tyre-changing machine 10;
- mounting on the spindle 14 the wheel R by tightening the rim C on the spindle 14 so as to fix the axis A, with the first flank F1 arranged in a distal position with respect to the bed 12 and the second flank F2 arranged in a proximal position with respect to the bed 12;
- pushing the second flank F2 by means of the demounting tool 32 along the direction of moving away D2 until extracting the first flank F1 from the rim C, which occurs by reciprocally moving the spindle 14 and the demounting tool 32 parallel to the axis A with a stroke that extends between the two ends, so as to push the tyre PN out from the rim C during the stroke.

Unlike the prior art, the spindle 14 does not need to make the wheel R rotatable with respect to the bed 12 during removal, so that it is advantageously fixed (easier construction).

Since for the extraction of the tyre PN, the relative motion between the wheel R and the demounting tool 32 is very important, the latter might be fixed and the spindle 14 movable along the directions D1 and D2.

The spatial inclination of the wheel R, when mounted on the spindle 14, with respect to the bed 12 may be any.

The machine 10 has the advantage of reducing the risk of damaging the tyre PN during removal because:
- no rotation of the tyre PN occurs while the second flank F2 is pressed by the demounting tool 32;
- the removal force is applied by the demounting tool 32 on a very large surface and in any case larger than in the known systems.

## Claims

1. Tyre-changing machine (10) for removing a bead-broken tyre from the rim of a wheel, comprising:
- at least a bed (12) for resting on the ground;
- at least a spindle (14) which extends from said bed (12) and on which is mountable at least a wheel (R) having a rim (C) and a tyre (PN) with a first flank (F1) and a second flank (F2), said spindle (14) being configured to tighten said rim (C) on it so as to fix an imaginary axis (A) of rotation of the wheel (R), with said first flank (F1) arranged in a distal position with respect to said bed (12) and said second flank (F2) arranged in a proximal position with respect to said bed (12); and
- at least a demounting tool (32) having a non-rolling contact surface (34) able to contact and push said second flank (F2) in the direction of moving away (D2) from said bed (12) until extracting said first flank (F1) from said rim (C), said spindle (14) and said demounting tool (32) being reciprocally movable along a direction substantially parallel to said axis (A) with a stroke that extends between two ends, so as to push said tyre (PN) out of said rim (C) during the stroke;
**characterized by** the fact that said non-rolling contact surface (34) is substantially curved with the concavity thereof facing said axis (A).

2. Machine according to claim 1, **characterized by** the fact that the relative distance between said demounting tool (32) and said spindle (14) is adjustable (D1) orthogonally to said axis (A).

3. Machine according to claim 1 or 2, **characterized by** the fact that said demounting tool (32) is mounted on a support arm (30) which is movable with respect to said bed (12) along said direction of moving away (D2).

4. Machine according to one or more of the preceding claims, **characterized by** the fact that said non-rolling contact surface (34) has an angular sector (α) within the range 30°-60°.

5. Machine according to one or more of the preceding claims, **characterized by** the fact that said non-rolling contact surface (34) has an angular sector (α) within the range 40°-50°.

6. Machine according to one or more of the preceding claims, **characterized by** the fact that said spindle (14) is able to maintain said rim (C) in a fixed angular position during the pushing of said demounting tool (32) on said second flank (F2).

7. Machine according to one or more of the preceding claims, **characterized by** the fact that said ends of the stroke are at a distance of at least 40 cm.

## Patentansprüche

1. Reifenwechselmaschine (10) zum Entfernen eines Reifens mit gebrochenem Wulst von einer Radfelge, umfassend:
mindestens ein Bett (12) zum Aufliegen auf dem Boden;
mindestens eine Spindel (14), die sich vom Bett (12) erstreckt und an der mindestens ein Rad (R) mit einer Felge (C) und einem Reifen (PN) mit einer ersten Flanke (F1) und einer zweiten Flanke (F2) montierbar ist, wobei die Spindel (14) zum Spannen der Felge (c) darauf konfiguriert ist, um eine imaginäre Drehachse (A) des Rades (R) zu fixieren, wobei die erste Flanke (F1) in einer distalen Position in Bezug auf das Bett (12) angeordnet ist und die zweite Flanke (F2) in einer proximalen Position in Bezug auf das Bett (12) angeordnet ist; und
mindestens ein Demontagewerkzeug (32), aufweisend eine nichtrollende Kontaktoberfläche (34), welche mit der zweiten Flanke (F2) in Richtung der Bewegung (D2) weg von dem Bett (12) bis zum Entnehmen der ersten Flanke (F1) von der Felge (C) in Kontakt treten und diese drücken kann, wobei die Spindel (14) und das Demontagewerkzeug (32) entgegengesetzt entlang einer Richtung beweglich sind, die im Wesentlichen parallel zur Achse (A) verläuft, mit einem Hub, der sich zwischen zwei Enden erstreckt, um während des Hubs den Reifen (PN) von der Felge (C) zu drücken; **dadurch gekennzeichnet, dass** die nichtrollende Kontaktoberfläche (34) im Wesentlichen mit der Höhlung derselben zur Achse (A) weisend gekrümmt ist.

2. Maschine nach Anspruch 1, **dadurch gekennzeichnet, dass** der relative Abstand zwischen dem Demontagewerkzeug (32) und der Spindel (14) orthogonal zur Achse (A) einstellbar ist (D1).

3. Maschine nach Anspruch 1 oder 2, **dadurch gekennzeichnet, dass** das Demontagewerkzeug (32) an einem Tragarm (30) montiert ist, der in Bezug auf das Bett (12) entlang der Wegbewegungsrichtung (D2) beweglich ist.

4. Maschine nach einem der vorhergehenden Ansprüche, **dadurch gekennzeichnet, dass** die nichtrollende Kontaktoberfläche (34) einen Winkelbereich (α) innerhalb des Bereichs von 30°-60° aufweist.

5. Maschine nach einem der vorhergehenden Ansprüche, **dadurch gekennzeichnet, dass** die nichtrollende Kontaktoberfläche (34) einen Winkelbereich (α) innerhalb des Bereichs von 40°-50° aufweist.

6. Maschine nach einem der vorhergehenden Ansprüche, **dadurch gekennzeichnet, dass** die Spindel (14) die Felge (C) in einer festen winkelposition während des Drückens des Demontagewerkzeug (32) auf die zweite Flanke (F2) beibehalten kann.

7. Maschine nach einem der vorhergehenden Ansprüche, **dadurch gekennzeichnet, dass** die Enden des Hubs einen Abstand von mindestens 40 cm dazwischen aufweisen.

## Revendications

1. Machine (10) de changement de pneu servant à enlever de la jante d'une roue un pneu dont le bourrelet est rompu, la machine comprenant :
au moins un lit (12) destiné à être placé sur le sol,
au moins une broche (14) qui déborde dudit lit (12) et sur laquelle peut être montée au moins une roue (R) présentant une jante (C) et un pneu (PN) présentant un premier flanc (F1) et un deuxième flanc (F2),
ladite broche (14) étant configurée pour serrer ladite jante (C) sur elle de manière à immobiliser un axe imaginaire de rotation (A) de la roue (R),
ledit premier flanc (F1) étant agencé en position distale par rapport audit lit (12) et ledit deuxième flanc (F2) étant agencé en position proximale par rapport audit lit (12) et
au moins un outil de démontage (32) présentant une surface de contact (34) non déroulante apte à entrer en contact et à repousser ledit deuxième flanc (F2) dans le sens de l'éloignement (D2) par rapport audit lit (12) en extrayant ledit flanc (F1) de ladite jante (C), ladite broche (14) et ledit outil de démontage (32) pouvant se déplacer en va-et-vient sur une course qui s'étend entre deux extrémités dans une direction essentiellement parallèle audit axe (A) de manière à repousser ledit pneu (PN) hors de ladite jante (C) pendant la course,
**caractérisée en ce que**
ladite surface de contact (34) non déroulante est essentiellement incurvée et **en ce que** sa concavité est orientée vers ledit axe (A).

2. Machine selon la revendication 1, **caractérisée en ce que** la distance relative entre ledit outil de démontage (32) et ladite broche (14) perpendiculairement audit axe (A) peut être ajustée (D1).

3. Machine selon les revendications 1 ou 2, **caractérisée en ce que** ledit outil de démontage (32) est monté sur un bras de support (30) mobile par rapport audit lit (12) dans ladite direction d'éloignement (D2).

4. Machine selon l'une ou plusieurs des revendications précédentes, **caractérisée en ce que** ladite surface de contact (34) non déroulante présente un secteur angulaire (α) de l'ordre de 30° à 60°.

5. Machine selon l'une ou plusieurs des revendications précédentes, **caractérisée en ce que** ladite surface de contact (34) non déroulante présente un secteur angulaire (α) compris dans la plage de 40° à 50°.

6. Machine selon l'une ou plusieurs des revendications précédentes, **caractérisée en ce que** ladite broche (14) est en mesure de maintenir ladite jante (C) en position angulaire fixe pendant que ledit outil de démontage (32) est repoussé contre ledit deuxième flanc (F2).

7. Machine selon l'une ou plusieurs des revendications précédentes, **caractérisée en ce que** lesdites extrémités de la course se situent à une distance mutuelle d'au moins 40 cm.
